# EUROPÄISCHE PATENTANMELDUNG

(11) **EP 1 127 643 A2**
(43) Veröffentlichungstag der Anmeldung: **29.08.2001**
(21) Anmeldenummer: 00126398.7
(22) Anmeldetag: 04.12.2000
(51) Int. Cl.: B23B 31/18, B23B 31/19

(54) **Hebelfutter für Kurbelwellen**

(30) Priorität: 19.02.2000 DE 20003066 U
(71) Anmelder: Röhm GmbH, 89567 Sontheim (DE)
(72) Erfinder: Taglang, Johann, 89441 Medlingen (DE)
(74) Vertreter: Hentrich, Swen Dipl.-Phys. Dr.

(57) **Zusammenfassung**

Die Erfindung betrifft ein kraftbetätigtes Hebelfutter mit als Hebel (4) ausgebildeten Spannarmen (3), die zum Lösen und Spannen von Werkstücken durch eine axial verschiebbare Spannstange (7) oder dergl. um eine einer Sehne des Querschnitts des Futterkörpers (5) entsprechende Schwenkachse (6) verstellbar sind und an ihren freien Enden angeordnete Spanneinsätze (9) aufweisen. An den Spannarmen (3) sind axiale und radiale Schrägflächen (10,11) ausgebildet, die einen Neigungswinkel mit der axialen bzw radialen Richtung einschliessen, wobei der Durchmesser der axialen Schrägflächen (10) in axialer Richtung sich zum Ende der Spannarme (3) verringert und an den Spanneinsätzen (9) korrespondierend geneigte Anlageflächen (12) ausgebildet sind.

## Beschreibung

Die Erfindung betrifft ein kraftbetätigtes Hebelfutter mit als Hebel ausgebildeten Spannarmen, die zum Lösen und Spannen von Werkstücken, insbesondere Kurbelwellen, durch eine axial verschiebbare Spannstange, einen Kolben oder dergl., um eine einer Sehne des Futterkörperquerschnitts entsprechende Schwenkachse verstellbar sind und an ihren freien Enden angeordnete Spanneinsätze aufweisen.

Derartige aus der Praxis bekannte Hebelfutter werden paarweise dazu verwendet, um Kurbelwellen an deren beiden freien Enden einzuspannen. Bei diesem Anwendungsfall, bei dem ein Werkstück nicht einseitig, sondern auf zwei Seiten eingespannt wird, ist es wichtig, daß beim Spannen auf das Werkstück keine Zug- oder Druckkräfte einwirken, die zu einer Längung bzw. Stauchung und damit zu einer Deformation führen, die die Genauigkeit beeinträchtigt, mit der das Werkstück bearbeitet werden kann.

Der Erfindung liegt daher die Aufgabe zugrunde, ein Hebelfutter der eingangs genannten Art so auszubilden, daß beim Spannen das Auftreten von in axialer Richtung wirkenden Kräften verringert wird.

Diese Aufgabe wird nach der Erfindung bei einem Hebelfutter der eingangs genannten Art dadurch gelöst, daß an den Spannarmen axial und radiale Schrägflächen ausgebildet sind, die einen Neigungswinkel mit der axialen bzw. radialen Richtung einschließen, daß der Durchmesser der axialen Schrägflächen in Axialrichtung sich zum Ende der Spannarme verringert, und daß an den Spanneinsätzen korrespondierend geneigte Anlageflächen ausgebildet sind.

Die Erfindung bietet den Vorteil, daß beim Absenken der Spannarme mit den Spanneinsätzen auf das Werkstück, die in einer Schwenkbewegung erfolgt, keine Aufbiegung der Spanneinsätze stattfindet, da die dazu erforderlichen, in axialer Richtung wirkenden Kräfte sowohl von den radialen als auch den axialen Schrägflächen infolge von deren Neigung aufgenommen werden können, die Abstützung der Spanneinsätze an den Spannarmen also verbessert ist.

Als besonders günstig hat sich dabei weiterhin gezeigt, wenn zur Befestigung der Spanneinsätze in den Spannarmen parallel zur axialen Schrägflächen und senkrecht zur radialen Schrägfläche verlaufende Gewindebohrungen ausgebildet sind. Dies bietet den großen Vorteil, daß die der Befestigung der Spanneinsätze dienenden Schrauben gleichfalls geneigt verlaufen und damit der Schraubenkopf radial weiter nach innen versetzt ist und somit näher an der Kontaktstelle der Spanneinsätze zu dem Werkstück liegt, also die Schrauben die dort auftretenden, in axialer Richtung wirkenden Kräfte über die Gewindebohrung in den Spannarm einleiten können, ohne daß an den Spanneinsätzen große Hebelkräfte wirken.

Im Rahmen der Erfindung ist weiterhin vorgesehen, daß die Stirnseite der Spanneinsätze in dem dem Werkstück anliegenden Spannzustand im wesentlichen radial orientiert ist. Da die gegenüberliegende Anlagefläche geneigt verläuft, führt dies dazu, daß die Materialstärke der Spanneinsätze sich radial von außen nach innen vergrößert, was die Stabilität und Biegesteifigkeit der Spanneinsätze erhöht und so einem Durchbiegen der Spanneinsätze entgegenwirkt.

Um den dadurch entstehenden Platzbedarf zu verringern, ist im Rahmen der Erfindung vorgesehen, daß die Spanneinsätze sich auf der gegenüber den Gewindebohrungen radial innen liegenden Seite in axialer Richtung zu den axial verlaufenden Spannflächen verjüngen, wobei die Biegesteifigkeit der Spanneinsätze durch diese Maßnahme nicht nennenswert beeinträchtigt wird.

Im folgenden wird die Erfindung an einem in der Zeichnung dargestellten Ausführungsbeispiel näher erläutert; es zeigen:
- Fig. 1: die Vorderansicht eines erfindungsgemäßen Hebelfutters mit drei gleichmäßig über den Umfang verteilt angeordneten, die Spanneinsätze tragenden Spannarmen,

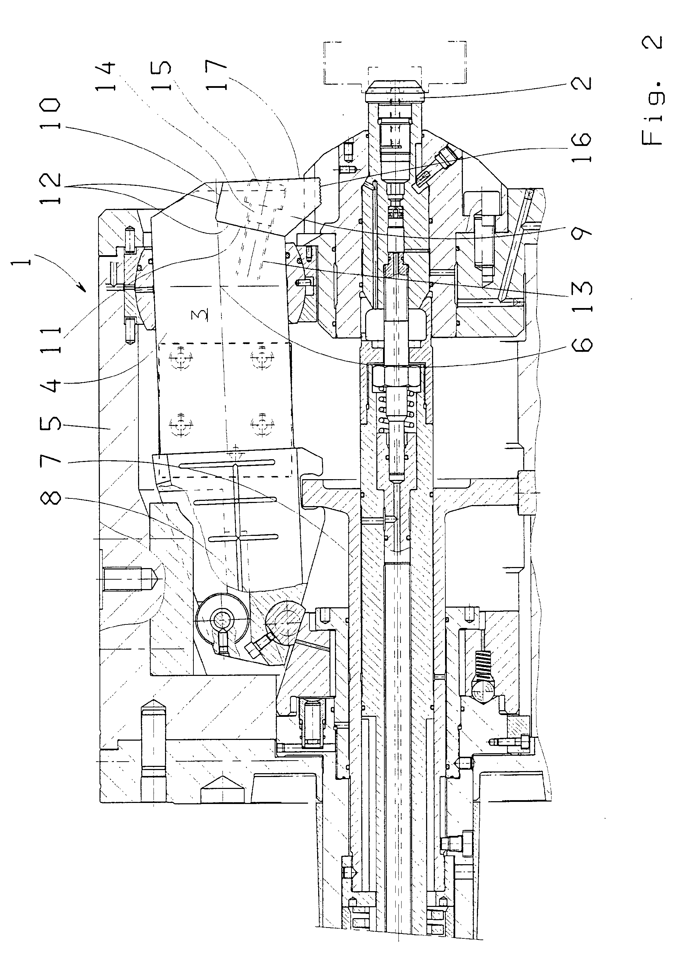

- Fig. 2: einen Axialschnitt durch das erfindungsgemäße Hebelfutter,
- Fig. 3: eine Vorderansicht eines Spanneinsatzes,

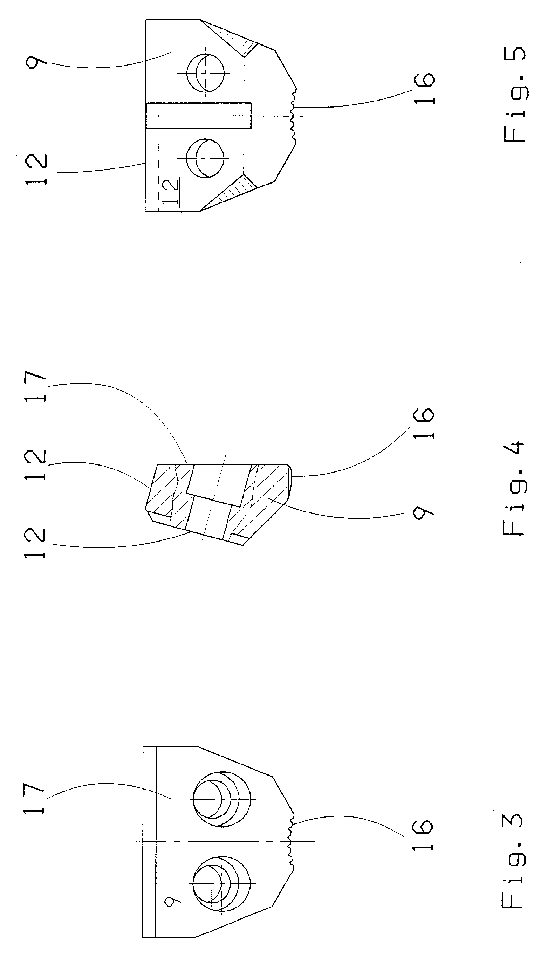

- Fig. 4: einen Axialschnitt durch den Spanneinsatz aus Fig. 3, und
- Fig. 5: eine Rückansicht des Spanneinsatzes aus Fig. 3.

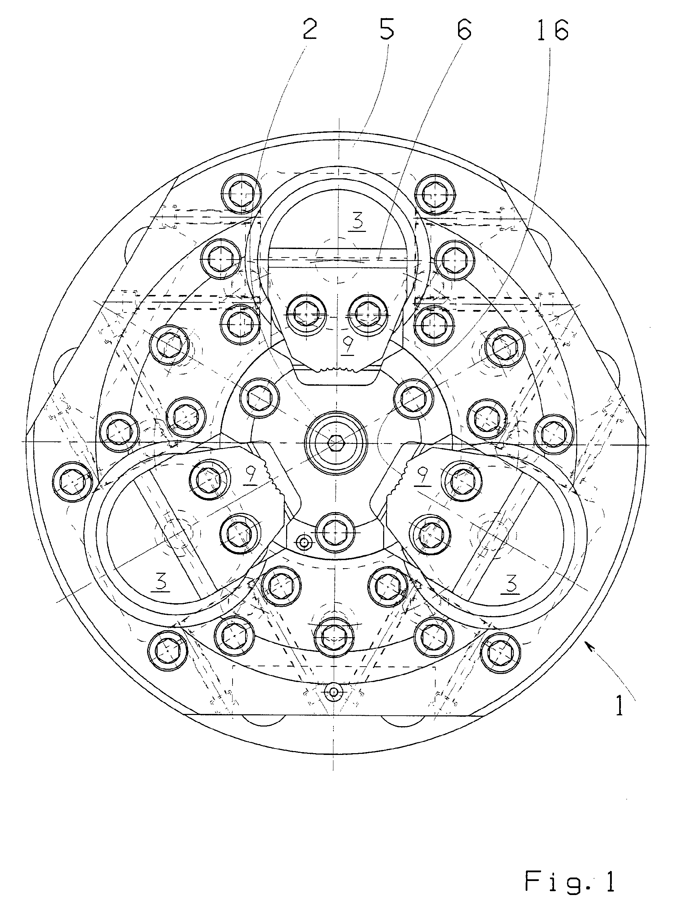

In Fig. 1 ist die Stirnseite eines kraftbetätigten Hebelfutters 1 dargestellt, das eine für die Erläuterung der Erfindung nicht weiter relevante zurückziehbare Zentrierspitze 2 und drei gleichmäßig über den Umfang verteilt angeordnete Spannarme 3 aufweist, mit denen ein Werkstück zentrisch bzw. ausgleichend gespannt werden kann. Diese Spannarme 3 sind als Hebel 4 ausgebildet und im Futterkörper 5 um eine Schwenkachse 6 verstellbar, die in einem Querschnitt durch das Hebelfutter 1 auf einer Sehne des kreisrunden Futterkörpers 5 liegt. Die an sich bekannte und hier daher nicht näher zu erläuternde Verstellung der Spannarme 3 erfolgt, indem eine mit einem Spannzylinder gekoppelte Spannstange 7 in axialer Richtung verstellt wird, die mit den Spannarmen 3 verbunden ist und so auch deren auf einer Keilfläche 8 abgestützten Enden verschiebt, wodurch sich an den gegenüberliegenden Enden die Schwenkbewegung ergibt. An diesen gegenüberliegenden Enden sind an den Spannarmen 3 Spanneinsätze 9 angeordnet, wozu die Spannarme 3 axiale und radiale Schrägflächen 10,11 aufweisen, die einen Neigungswinkel mit der axialen bzw. radialen Richtung einschließen. Dabei verringert sich der Durchmesser der axialen Schrägfläche 10 in axialer Richtung bis zum Ende der Spannarme 3. Die axiale und die radiale Schrägfläche 10,11 schließen einen Winkel von 90° Grad miteinander ein. An den Spanneinsätzen 9 sind korrespondierend geneigte Anlageflächen 12 ausgebildet. Zur Befestigung der Spanneinsätze 9 an den Spannarmen 3 sind parallel zur axialen Schrägfläche 10 und senkrecht zur radialen Schrägfläche 11 verlaufende Gewindebohrungen 13 ausgebildet, so daß die Spanneinsätze 9 mit Schrauben 14, deren Schraubenkopf 15 radial relativ weit den an den Spanneinsätzen 9 ausgebildeten Spannflächen 16 angenähert ist, an den Spannarmen 3 befestigt werden kann. Es liegt eine Verdickung der Spanneinsätze 9 radial von außen nach innen vor, was hinsichtlich der Stabilität der Spanneinsätze 9 vorteilhaft ist. Zur Verringerung des Platzbedarfes in axialer Richtung verjüngen sich dabei die Spanneinsätze 9 auf den gegenüber den Gewindebohrungen 13 radial innen liegenden Seiten.

Mit derartigen, paarweise eingesetzten Hebelfuttern 1 lassen sich vorteilhaft insbesondere Kurbelwellen spannen, da neben der hohen Spanngenauigkeit in axialer Richtung auftretende Zug- oder Druckkräfte von den Spanneinsätzen 9 aufgenommen und an die Spannarme 3 abgeleitet werden können, ohne daß die Spanneinsätze 9 sich deformieren und damit auch zu einer Deformation, also Stauchung oder Längung, der eingespannten Kurbelwellen führen.

## Patentansprüche

1. Kraftbetätigtes Hebelfutter mit als Hebel (4) ausgebildeten Spannarmen (3), die zum Lösen und Spannen von Werkstücken, insbesondere Kurbelwellen, durch eine axial verschiebbare Spannstange (7), einen Kolben oder dergl., um eine einer Sehne des Querschnitts des Futterkörpers (5) entsprechende Schwenkachse (6) verstellbar sind und an ihren freien Enden angeordnete Spanneinsätze (9) aufweisen, dadurch gekennzeichnet, daß an den Spannarmen (3) axiale und radiale Schrägflächen (10,11) ausgebildet sind, die einen Neigungswinkel mit der axialen bzw radialen Richtung einschliessen, daß der Durchmesser der axialen Schrägflächen (10) in axialer Richtung sich zum Ende der Spannarme (3) verringert, und daß an den Spanneinsätzen (9) korrespondierend geneigte Anlageflächen (12) ausgebildet sind.

2. Hebelfutter nach Anspruch 1, dadurch gekennzeichnet, daß zur Befestigung der Spanneinsätze (9) in den Spannarmen (3) parallel zur axialen Schrägfläche (10) und senkrecht zur radialen Schrägfläche (11) verlaufende Gewindebohrungen (13) ausgebildet sind.

3. Hebelfutter nach Anspruch 1 oder 2, dadurch gekennzeichnet, daß die Stirnseite (17) der Spanneinsätze (9) in dem dem Werkstück anliegenden Spannzustand im wesentlichen radial orientiert ist.

4. Hebelfutter nach Anspruch 2 oder 3, dadurch gekennzeichnet, daß die Spanneinsätze (9) sich auf den gegenüber den Gewindebohrungen (13) radial innenliegenden Seiten in axialer Richtung zu den axial verlaufenden Spannflächen (16) verjüngen.
